Europäisches Patentamt

European Patent Office

Office européen des brevets

(11) Veröffentlichungsnummer: **0 392 244**
**A2**

(12) **EUROPÄISCHE PATENTANMELDUNG**

(21) Anmeldenummer: **90105712.5**

(51) Int. Cl.5: **H04B 10/14**

(22) Anmeldetag: **26.03.90**

(30) Priorität: **14.04.89 DE 3912346**

(43) Veröffentlichungstag der Anmeldung:
**17.10.90 Patentblatt 90/42**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Härle, Hans-Georg, Dipl.-Ing.**
**Haldenweg 4**
**D-8901 Stadtbergen(DE)**

(54) **Optischer Empfänger mit einer Lawinenphotodiode.**

(57) Bei optischen Empfängern ist häufig eine Empfindlichkeitsregelung notwendig, um trotz stark unterschiedlicher Empfangslichtleistungen die erzeugten elektrischen Signale in einen vergleichsweise kleinen Amplitudenbereich abgeben zu können. Bei optischen Empfängern mit Lawinenphotodioden ist es üblich, über den Multiplikationsfaktor der Lawinenphotodiode die Eingangsempfindlichkeit zu regeln, bei entsprechend großen Eingangsamplitudenbereichen ist es außerdem üblich, der Lawinenphotodiode weitere geregelte Verstärker nachzuschalten. Der Abgleich und die Optimierung mehrerer miteinander gekoppelter Regelkreise ist aber schwierig und aufwendig, sodaß beim erfindungsgemäßen optischen Empfänger ein ungeregelter Transimpedanzverstärker mit nachgeschaltetem ungeregelten Begrenzerverstärker vorgesehen ist und die Regeleinrichtung einen vom Ausgangssignal des Begrenzerverstärkers abhängigen inversen PI-Regler enthält.

EP 0 392 244 A2

## Optischer Empfänger mit einer Lawinenphotodiode

Die Erfindung betrifft einen optischen Empfänger entsprechend dem Oberbegriff des Anspruchs 1.

Optische Empfänger hoher Empfindlichkeit enthalten häufig als Lichtdetektor eine Lawinenphotodiode (APD). Beim Einsatz derartiger Empfänger in Empfangsstellen mit starken unterschiedlicher Lichtleistungen ergibt sich die Notwendigkeit, den Empfänger einerseits möglichst empfindlich zu gestalten und andererseits eine ausreichende Großsignalfestigkeit zu ermöglichen.

Aus der EP-A1-0282801 ist bereits ein optischer Empfänger mit einer Lawinenphotodiode bekannt, bei dem die Empfängerempfindlichkeit durch Regelung des Multiplikationsfaktors der Lawinenphotodiode verändert werden kann. Die Regelung erfolgt dabei dadurch, daß dem Vorstrom bzw. der Vorspannung der Lawinenphotodiode ein niederfrequentes Signal geringer Amplitude überlagert, dessen Dämpfung durch die Lawinenphotodiode festgestellt und diese mit einem Normwert verglichen wird. Abweichungen vom Normwert äußern sich in einem mehr oder weniger großen Vergleichssignal, das zur Nachregelung des Vorstroms bzw. der Vorspannung dient. Es ergibt sich dabei eine sehr genaue Regelung, die aber vergleichsweise aufwendig ist.

Es ist auch bekannt, in Lawinenphotodioden enthaltenden optischen Empfängern neben einer Vorspannungsregelung für die Lawinenphotodiode einer geregelten oder einer ungeregelten Transimpedanzverstärker und einen diesen nachgeschalteten zusätzlichen geregelten Verstärker zu verwenden. Durch diese Anordnung mehrerer voneinander getrennter Regelstrecken kann zwar bei einem Eingangsamplitudenbereich des Lichtsignals von etwa 65 dB ein Ausgangsamplitudenbereich des elektrischen Si gnals von etwa 25 dB erreicht werden, es ist dabei aber nötig, mehrere miteinander gekoppelte Regelkreise abzugleichen und insgesamt zu optimieren.

Die Aufgabe bei der vorliegenden Erfindung besteht also darin, bei vergleichsweise geringem Aufwand einen optischen Empfänger ausreichender Genauigkeit zu schaffen, ohne daß mehrere miteinander gekoppelte Regelkreise verwendet werden müssen.

Erfindungsgemäß wird die Aufgabe durch einen optischen Empfänger der eingangs erwähnten Art gelöst, der durch die im Kennzeichen des Patentanspruchs 1 angegebenen Merkmale weitergebildet ist.

Von besonderem Vorteil bei der erfindungsgemäßen Lösung ist der sehr einfache Aufbau mittels handelsüblicher Bauelemente, der einer Integration und damit einer leichten Massenherstellung entgegenkommt. Bevorzugte Weiterbildungen des erfindungsgemäßen Empfängers mit einfach aufgebauten Regeleinrichtungen sind in den Patentansprüchen 2 und 3 beschrieben.

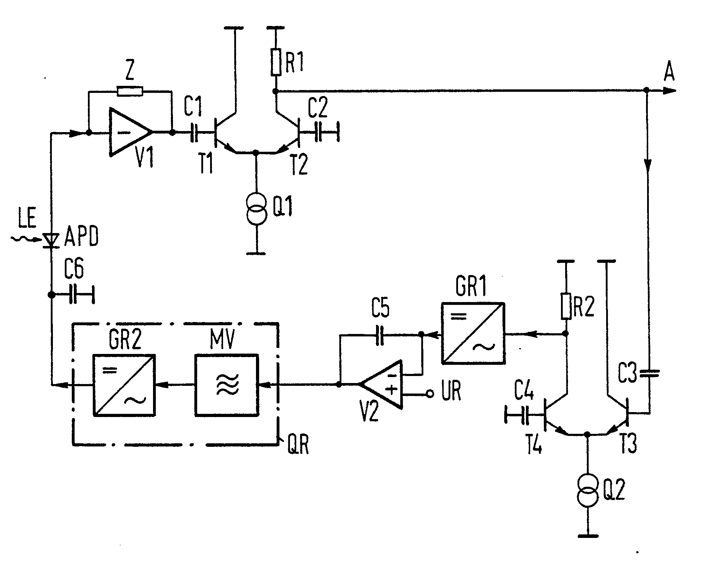

Die Erfindung soll im folgenden anhand eines in der Zeichnung dargestellten Ausführungsbeispiels näher beschrieben werden.

Die einzige Figur der Zeichnung zeigt eine optische Empfängerschaltung mit einer an einer Lichtwellenleitereingang LE optisch angekoppelten Lawinenphotodiode APD. Beim Empfängereingang LE handelt es sich um das Ende eines Lichtwellenleiters, der zusammen mit der Lawinenphotodiode APD in einem Empfängermodul enthalten ist. Mit dem Anodenanschluß der Lawinenphotodiode APD ist der Eingang eines Transimpedanzverstärkers verbunden, der in bekannter Weise dadurch realisiert wurde, daß der positive Ausgang eines Operationsverstärkers V1 über eine Impedanz Z mit dessen invertierenden Eingang verbunden ist. Über einen ersten Kondensator C1 ist dem Ausgang des Transimpedanzverstärkers V1 der Basisanschluß eines ersten Transistors T1 nachgeschaltet, der zusammen mit einem zweiten Transistor T2 einen emittergekoppelten Differenzverstärker bildet. Die beiden Emitteranschlüsse sind dabei mit einer ersten Stromquelle Q1 verbunden, die beim Ausführungsbeispiel durch einen an die Betriebsspannung angeschlossenen Widerstand realisiert wurde. Während der Kollektoranschluß des ersten Transistors T1 direkt mit Bezugspotential verbunden ist, ist der Kollektoranschluß des zweiten Transistors T2 unmittelbar mit dem Ausgangsanschluß A des optischen Empfängers und außerdem über einen ersten Widerstand R1 mit Bezugspotential verbunden. Der Lawinenphotodiode APD sind also ein ungeregelter Transimpedanzverstärker und ein weiterer ungeregelter, aber als Begrenzer wirkender Differenzverstärker nachgeschaltet.

Die Vorspannung der Lawinenphotodiode APD wird mittels einer Regeleinrichtung erzeugt, deren Eingangsanschluß mit dem Ausgangsanschluß A des optischen Empfängers und deren Ausgangsanschluß mit dem Kathodenanschluß der Lawinenphotodiode APD verbunden ist. Die Regeleinrichtung weist insgesamt inverses PI-Verhalten auf, wobei in Abhängigkeit vom Ausgangssignal des optischen Empfängers der Multiplikationsfaktor M der Lawinenphotodiode APD mit steigender Ausgangssignalamplitude auf einen Minimalwert von $M = 1$ heruntergeregelt wird. An diesem Punkt setzt dann die Begrenzerwirkung des aus dem ersten und dem zweiten Transsitor T1, T2 aufgebauten Differenzverstärkers ein, die die Amplitude am Ausgang A des optischen Empfängers auf einen bestimmten Maximalwert begrenzt, sodaß der Amplitudenbereich des elektrischen Ausgangssignals etwa 25 dB bei einem Eingangsamplitudenbereich des Lichtsignals von etwa 65 dB nicht überschreitet.

Die Regeleinrichtung enthält eingangsseitig zur Pegelanhebung einen emittergekoppelten Differenzverstärker. Dazu ist mit dem Ausgang A des optischen Empfängers über einen dritten Kondensator C3 der Basisanschluß eines dritten Transistors T3 verbunden, dessen Kollekturanschluß mit Bezugspotential und dessen Emitteranschluß mit dem Emitteranschluß eines vierten Transistors T4 und über eine zweite Stromquelle Q2 mit Bezugspotential verbunden ist. Die zweite Stromquelle Q2 ist wie die erste Stromquelle Q1 mittels eines Widerstandes und einer Spannungsquelle realisiert. Der Basisanschluß des vierten Transistors T4 ist über einen vierten Kondensator C4 an Bezugspotential angeschlossen, der Kollektoranschluß des vierten Transistors T4 ist über einen zweiten Widerstand R2 mit Bezugspotential und außerdem mit einem Anschluß eines ersten Gleichrichters GR1 verbunden. Mit dem Ausgang des ersten Gleichrichters GR1 ist der negative Eingang eines zweiten Operationverstärkers V2 sowie über einen fünften Kondensator C5 dessen nichtinvertierter Ausgang verbunden. Der positive Eingang des zweiten Operationsverstärkers V2 ist an einer Referenzspannungsquelle UR angeschlossen. Der kapazitiv rückgekoppelte zweite Operationsverstärker V2 wirkt als Integrator und erzeugt eine Regelspannung, mit der die Ausgangsspannung einer einstellbaren Gleichspannungsquelle RV für die Lawinenphotodiode APD eingestellt wird. Als einstellbare Gleichspannungsquelle kann ein an eine entsprechende Betriebsspannung angeschlossenes Regelpotentiometer dienen, beim Ausführungsbeispiel wurde die Kombination aus einem Multivibrator MV und einem zweiten Gleichrichter GR2 in Form einer Gleichrichterkaskade gewählt. Durch diese Ausbildung der regelbaren Vorspannungsquelle ist es möglich, trotz der beim Ausführungsbeispiel vergleichsweise geringen Versorgungsspannungen von etwa 15 V eine Vorspannung von etwa 40 V für die Lawinenphotodiode zu erzeugen. Dabei dient die Ausgangsspannung des zweiten Operationsverstärkers V2 als Versorgungsspannung für den Multivibrator MV, das Ausgangssignal des zweiten Gleichrichters GR2 wird über einen sechsten Kondensator C6 als Siebkondensator der Lawinenphotodiode zugeführt. Wegen der vergleichsweise langsamen Veränderung der Eingangssignalamplitude am optischen Empfänger kann die Regeleinrichtung in einem vergleichsweise sehr niedrigen Frequenzbereich arbeiten, sodaß an die Bauteile der Regeleinrichtung nach dem ersten Gleichrichter GR1 frequenzmäßig keine besonderen Ansprüche gestellt werden und der Aufbau der Regeleinrichtung auch in dieser Hinsicht wenig aufwendig ist.

## Ansprüche

1. Optischer Empfänger für gleichanteilfreie Lichtsignale mit einer Lawinenphotodiode und nachgeschaltetem Transimpedanzverstärker, dem weitere Verstärker nachgeschaltet sein können sowie mit einer Regeleinrichtung für die Vorspannung der Lawinenphotodiode,
**dadurch gekennzeichnet,**
daß ein ungeregelter Transimpedanzverstärker (V1, Z) mit nachgeschaltetem, ungeregeltem Begrenzerverstärker (T1, T2) vorgesehen ist und die Regeleinrichtung einen vom Ausgangssignal des Begrenzerverstärkers (T1, T2) abhängigen inversen PI-Regler enthält.

2. Optischer Empfänger nach Patentanspruch 1,
**dadurch gekennzeichnet,**
daß die Regeleinrichtung einen mit dem Ausgangsanschluß A des optischen Empfängers über einen Verstärker (T3, T4) angeschlossenen ersten Gleichrichter GR1 enthält, dessen Ausgangsanschluß direkt mit dem negativen Eingang eines Operationsverstärkers (V2) und über einen Kondensator (C5) mit dem nichtinvertierenden Ausgang dieses Operationsverstärkers (V2) verbunden ist, daß der Ausgang dieses Operationsverstärkers (V2) mit dem Stelleingang einer einstellbaren Gleichspannungsquelle (QR) verbunden ist, an dessen Ausgangsanschluß die Kathode der Lawinenphotodiode (APD) angeschlossen ist.

3. Optischer Empfänger nach Patentanspruch 2,
**dadurch gekennzeichnet,**
daß die einstellbare Gleichspannungsquelle (QR) einen Multivibrator (MV) enthält, dessen Versorgungsspannungsanschluß mit dem Ausgangsanschluß des Operationsverstärkers (V2) verbunden ist, daß der Ausgangsanschluß des Multivibrators (MV) mit dem Eingangsanschluß eines zweiten Gleichrichters (GR2) verbunden ist, dessen Ausgangsanschluß den Augangsanschluß der einstellbaren Gleichspannungsquelle (QR) darstellt.